# EUROPEAN PATENT APPLICATION

(11) **EP 4 671 711 A1**
(43) Date of publication of application: **31.12.2025**
(21) Application number: 24185556.8
(22) Date of filing: 28.06.2024
(51) Int. Cl.: G01K 1/02, G01K 1/14, G01K 1/20, G01K 13/10, G01K 11/3206, B01J 8/00

(54) **CATALYST BED FOR MEASURING TEMPERATURE GRADIENTS THEREIN**

(71) Applicant: Nederlandse Organisatie voor toegepast-natuurwetenschappelijk Onderzoek TNO, 2595 DA 's-Gravenhage (NL)
(72) Inventor: CHENG, Lun-Kai, 2595 DA 's-Gravenhage (NL); XU, Man, 2595 DA 's-Gravenhage (NL); TOET, Peter Martijn, 2595 DA 's-Gravenhage (NL)
(74) Representative: V.O.

(57) **Abstract**

The invention is directed at a catalyst bed comprising a temperature sensor array. The catalyst bed comprises a reactor chamber for being filled with a catalyst material, the reactor chamber having a bottom and one or more side walls defining an interior of the reactor chamber. The temperature sensor array comprises at least one first optical fiber part comprising at least two fiber grating sensors. Each of the at least two fiber grating sensors provides a temperature sensor of the temperature sensor array. The first optical fiber part is fixed to the reactor chamber in at least two mounting positions along a length of the first optical fiber part, such that the first optical fiber part between the two mounting positions extends through the interior of the chamber. The fixing of the first optical fiber part is such that the first optical fiber part is tensioned between the mounting positions, such that each of the at least two fiber grating sensors is located at a predefined sensing position in the interior of the chamber.

## Description

### Field of the invention

The present invention is directed at a catalyst bed comprising a temperature sensor array, wherein the catalyst bed comprises a reactor chamber for being filled with a catalyst material, the reactor chamber having a bottom and one or more side walls defining an interior of the reactor chamber.

### Background

The chemical process industry is developing in response to evolving demands for more energy-efficient systems. Heating by means of light-driven chemical processes or by means of induction are just some areas where innovations are being generated. At the same time, a continuing digitalization of industry is driving the development and optimization of materials, chemical processes and reactors.

These advancements highlight the importance of precise control over process variables. In particular, it is important to precisely monitor the temperature distributions within reactive materials inside a catalyst bed. Accurate measurement of these temperature gradients is essential for optimizing reaction conditions.

Currently known techniques for monitoring the temperatures of reactive materials inside catalyst beds involve the use of thermocouples installed in different locations of the catalyst beds and/or infrared (IR) cameras for surface temperature measurements. Both technologies have drawbacks: thermocouples cannot be used for temperature measurements at or close to the top of surface of a catalyst bed, as direct absorption of light by the thermocouple results in temperature overestimations. IR cameras can be used to image the temperature distribution of a (top) surface directly visible to the camera, but give no insight into temperatures beyond that surface.

Another known solution maps temperature gradients along a depth of a catalyst bed by introducing four fiber-optic sensors (FOS) at unique depths inside the catalyst bed. Each FOS is an optical fiber provided with a fiber Bragg grating (FBG). Each of the FBGs provides a local temperature sensor through its temperature-dependent optical behavior. Furthermore, in order to compensate for heat-induced expansion of materials, the fibers are fixed to a sidewall of the catalyst bed at one end and loosely held in place at the opposite end. However, a consequent drawback is that the fibers can move semi-freely in the interior of the catalyst bed, which causes uncertainty in the positions and/or depths of the FBGs and errors in the interpretation of measurement data.

### Summary of the invention

It is an object of the present invention to provide a catalyst bed that overcomes the abovementioned limitations and which enables measurement of 3D temperature gradients of reactive or catalyst materials contained therein.

To this end, there is provided herewith a catalyst bed comprising a temperature sensor array, wherein the catalyst bed comprises a reactor chamber for being filled with a catalyst material, the reactor chamber having a bottom and one or more side walls defining an interior of the reactor chamber, wherein the temperature sensor array comprises at least one first optical fiber part comprising at least two fiber grating sensors, wherein each of the at least two fiber grating sensors provides a temperature sensor of the temperature sensor array, and wherein the first optical fiber part is fixed to the reactor chamber in at least two mounting positions along a length of the first optical fiber part, such that the first optical fiber part between the two mounting positions extends through the interior of the chamber, and wherein the fixing of the first optical fiber part is such that the first optical fiber part is tensioned between the mounting positions, such that each of the at least two fiber grating sensors is located at a predefined sensing position in the interior of the chamber.

In use, the reactor chamber may be filled with a catalyst or reactive material. A reactor chamber of a catalyst bed according to the invention may include one wall, such as a cylindrical wall, but alternatively may include multiple walls for forming the interior of the chamber together with the bottom. The temperature sensor array is tensioned and fixed at two ends in the interior of the reactor chamber. The fiber grating sensors are thereby advantageously positioned at constant, predefined locations, even when filling the reactor chamber with a catalyst material or replacing it with another material. This enables to avoid sensor location uncertainties and data analysis errors that would be inherent to a semi-freely movable optical fiber. Moreover, in this way all of the fiber grating sensors in each first optical fiber part is subjected to a common strain. Temperature measurements are then performed by detecting optical signals reflected by and/or transmitted through the at least two fiber grating sensors. The reflective and transmissive optical behaviors of the fiber grating sensors depends on the temperature of the sensors, thereby enabling their use as local temperature sensors. The fiber grating sensors may for example be FBGs, but alternatives known to the skilled person that can leverage temperature-dependent optical behavior may be applied as well. Moreover, because the sensors are included in a single temperature sensor array, the catalyst bed has a simple layout, is easy to use and has a reduced risk of damage. Furthermore, the fiber grating sensors being located at a predefined sensing position in the interior of the chamber, enables temperature measurements to be taken along a slope, dependent on the location of the two mounting positions. In this way, temperature gradients of a catalyst material can be determined both along a z-direction, which extends between a point on the bottom of the reactor chamber to a point at the top of the reactor chamber, and across an xy-plane, extending transversely to the z-direction. The mounting positions can be placed in the reactor chamber at any desired location, providing a high degree of freedom for choosing the direction along which the at least one first optical fiber part extends. In an ideal case, the at least one optical fiber part would comprise an infinite number of fiber grating sensors distributed along its length. In practice, the length and spacing of the fiber grating sensors limit both the amount of sensors that can be included in a single optical fiber part and the resolution of a measured temperature gradient. However, a lower amount of fiber grating sensor readings can be compensated for by interpolation and extrapolation between and external to the locations of the fiber grating sensors.

In accordance with some embodiments of the invention, the reactor chamber optionally further has a top surface for defining the interior of the reactor chamber, such that the reactor chamber is a closed reactor chamber. In these embodiments the catalyst material inside the reactor chamber is thermally more isolated from the surroundings of the catalyst bed, which enables more accurate temperature measurements to be taken.

In accordance with some embodiments of the invention, each of the at least two mounting positions of the first optical fiber part is respectively fixed at a fixing location in the reaction chamber, such that the first optical fiber part extends between two points within the reaction chamber along a direction that is pointing away from the one or more sidewalls of the reaction chamber comprising the respective fixing locations. In this way, the fiber grating sensors are positioned at constant, predefined locations within the interior of the reaction chamber, each at unique distances from the two mounting positions. This enables temperature measurements to be taken away from the one or more sidewalls and away from the bottom and top of the reactor chamber and closer to the center of the interior of the reactor chamber.

In accordance with some embodiments of the invention, the first optical fiber part extends between two points within the reaction chamber in a direction such that each of the at least two fiber grating sensors is located at a unique sensing position between a top and the bottom of the catalyst bed, such as to enable measurement by the temperature sensors at different z-positions between the top and bottom of the catalyst bed. In these embodiments, each of the fiber grating sensors is located at a different height, or z-position, in the interior of the reactor chamber. Consequently, when performing a temperature measurement, readings may be obtained from the fiber grating sensors that each have a unique distance to the bottom and to the top of the reactor chamber and a temperature gradient having a z-component may be obtained.

In accordance with some embodiments of the invention, the catalyst bed comprises or is connectable to an optical source for providing an optical signal to the temperature sensor array for performing temperature measurements using the temperature sensors of the first optical fiber part. An optical source for providing the temperature sensor array may be integrated into a catalyst system, wherein the system comprises the catalyst bed according to the invention and the optical source. Alternatively, the catalyst bed may be arranged to be connectable to an external optical source. In these embodiments, the catalyst bed may be provided with an optical source that provides light having advantageous wave properties, such as spectral properties.

In accordance with some embodiments of the invention, the one or more sidewalls of the reactor chamber are formed of a material having a coefficient of thermal expansion below a predefined maximum, for example a coefficient of thermal expansion below 1*10⁻⁴ K⁻¹ at temperatures of approximately 400 K. In use, the temperatures of the catalyst material may be brought up to levels exceeding 400 K. Such high temperatures will cause the sidewalls to expand, resulting in strain on the optical fiber part and hence a common strain on all of the fiber grating sensors, which depends on the coefficient of thermal expansion of the sidewall material. Consequently, high temperatures will typically distort the optical temperature measurements. Ideally therefore, the coefficients of thermal expansion of the sidewalls are as low as possible. In this way, the strain effects can be kept at a controlled and limited level, or even a negligible level (for example, a level whereat the effect on the temperature measurements is less than 5% or preferably less than 1%).

In accordance with some embodiments of the invention, the one or more sidewalls of the reactor chamber comprise materials selected from a group comprising: Invar, Kovar, Silicon, Pyrex, and Zerodur. These materials are known to show low coefficients of thermal expansion, including in the neighborhood of 400 K. As such, this choice of materials aids in the controlling and limiting of strain effects on the optical temperature measurements.

In accordance with some embodiments of the invention, the catalyst bed further comprises an additional temperature sensor at a sensing position in or on a sidewall or the top surface or bottom of the reactor chamber for performing a reference temperature measurement of the reactor chamber material. This additional temperature sensor is not part of the tensioned optical fiber part and therefore does not experience strain caused by thermal expansion. Nevertheless, the additional temperature sensor can be used to perform a reference temperature measurement at a sidewall or the top surface of bottom bottom. This allows to calculate the thermal expansion of the sidewall and the strain on the first optical fiber part. It thereby enables to correct for this strain effect in the optical measurement data, improving the accuracy of the temperature measurements. In the case where the coefficients of thermal expansion are small, the correction advantageously is also small. In the ideal case where the coefficients of thermal expansion are negligible, correcting for the strain advantageously becomes unnecessary. However, even if the coefficients of thermal expansion are large, the additional temperature sensor at the sensing position in or on a sidewall or the bottom of the chamber enables the strain effect to be corrected for.

In accordance with some embodiments of the invention, the additional temperature sensor for performing said reference temperature measurement is provided by a second optical fiber part including a further fiber grating sensor, the second optical fiber part being mounted such that the further fiber grating sensor is unstrained in use. This embodiment involves an especially suitable reference sensor, because it includes the same type of sensor for the reference measurement as are included in the temperature sensor array, except in that the second optical fiber part is not strained. This reduces uncertainties to a minimum and thereby further advantageously affects measurement accuracy and precision.

In accordance with some embodiments of the invention, the second optical fiber part is provided by an extended part of one of the at least one first optical fiber parts. In these embodiments, first optical fiber parts and second optical fiber parts advantageously are parts of a same optical fiber. Temperature measurements using the fiber grating sensors, including reference temperature measurements can be taken using a single light bundle propagating through a single optical fiber.

In accordance with some embodiments of the invention, the at least one first optical fiber part comprises a plurality of first optical fiber parts comprising a plurality of temperature sensors such as to provide the temperature sensor array. While the plurality of first optical fiber parts are included in a single temperature sensor array, the inclusion of multiple first optical fiber parts therein advantageously allows a higher number of local temperature measurements to be performed simultaneously. Each first optical fiber part of the temperature sensor array may extend in any desired direction, providing a high degree of freedom in choosing the directions along which the plurality of first optical fiber parts extend.

In accordance with some embodiments of the invention, the catalyst bed comprises at least one third optical fiber part, the at least one third optical fiber part comprising a plurality of fiber grating sensors for measuring a lateral profile of a temperature distribution in a lateral direction with respect to a notional z-axis through a center location of the bottom, for enabling correction of temperature measurements obtained with the fiber grating sensors of the first optical fiber part with respect to the lateral temperature profile. The first optical fiber parts may typically be arranged in the reactor chamber, such as to extend at a slope with respect to the top or bottom of the chamber. The fiber grating sensors will then be located at unique z-positions, but also at different locations in the xy-plane. As such, the temperature gradient measured using the fiber grating sensors in the at least one first optical fiber parts may have an x-component, a y-component and a z-component. In order to compensate for the x-components and the y-components, additional measurements using the at least one third optical fiber part may be used. Like the at least one first optical fiber part, the at least one third optical fiber part is mounted in the reaction chamber, such that the fiber grating sensors of the at least one third optical fiber part are positioned in a constant, well defined location in the interior of the chamber. The combined temperature gradients of the at least one first optical fiber part and the at least one third optical fiber part may be analysed to determine a temperature gradient of the catalyst material in the z-direction by elimination of the x-components and y-components of the measured temperature gradients.

In accordance with some embodiments of the invention, lateral positions of each of the plurality of fiber grating sensors of the third optical fiber part uniquely correspond to a lateral position of a fiber grating sensor of the first optical fiber part. In these embodiments, the fiber grating sensors of the third optical fiber parts are advantageously positioned, since their positions in the xy-plane coincide with the positions of the fiber grating sensors of the first optical fiber parts. The x-components and y-components of measured temperature gradients can be compensated for more easily and efficiently.

In accordance with some embodiments of the invention, at least one of the at least one third optical fiber part is provided by an extended part of one of the at least one first optical fiber part. In these embodiments, first optical fiber parts and third optical fiber parts advantageously are parts of a same optical fiber. Temperature measurements using the fiber grating sensors, which are arranged along varying slopes can be taken using a single light bundle propagating through a single optical fiber. In some embodiments, first optical fiber parts, second optical fiber parts and third optical fiber parts are parts of a same optical fiber. These embodiments provide the capability of simultaneously generating temperature profiles at a slope with respect to the top and bottom of the reactor chamber, lateral temperature profiles, and reference temperature measurements, using a single optical fiber.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:

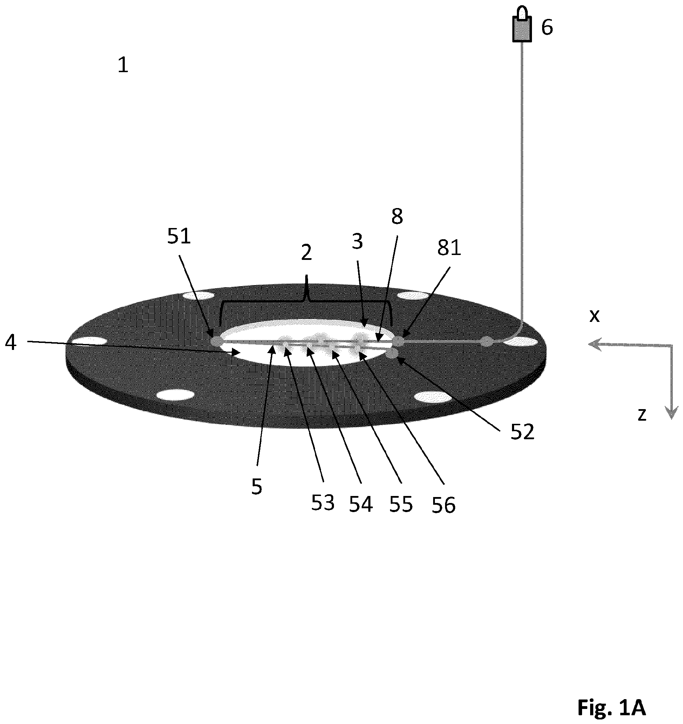

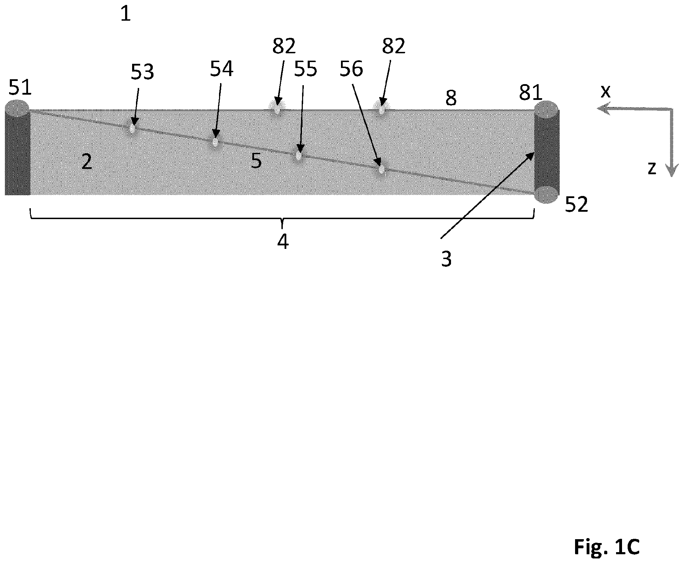

Figures 1A-1C schematically illustrate a catalyst bed 1 in accordance with an embodiment of the invention in respectively a bird's eye view, a top view and a cross-sectional view.

### Detailed description

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

Figures 1A-1C schematically illustrate a catalyst bed 1 in accordance with an embodiment of the invention in respectively a bird's eye view, a top view and a cross-sectional view. The catalyst bed 1 comprises a reactor chamber 2 and further comprises a cylindrical sidewall 3 and a bottom 4 for forming an interior of the chamber 2. In alternative embodiments, the interior of the reactor chamber 2 may comprise multiple sidewalls and thereby have a differently shaped reactor chamber. The catalyst bed 1 further comprises a first optical fiber part 5, fixed at two mounting positions 51 and 52 along a length of the optical fiber part 5. The optical fiber part 5 comprises four fiber grating sensors 53-56 positioned at unique points in the optical fiber part 5. The fiber part 5 thereby extends through the interior of the chamber 2 along a direction that points away from the two mounting positions 51 and 52. Optical fiber part 5 is tensioned, such that between the mounting positions 51 and 52, fiber part 5 extends in a straight line and the fiber grating sensors 53-56 experience a common tension.

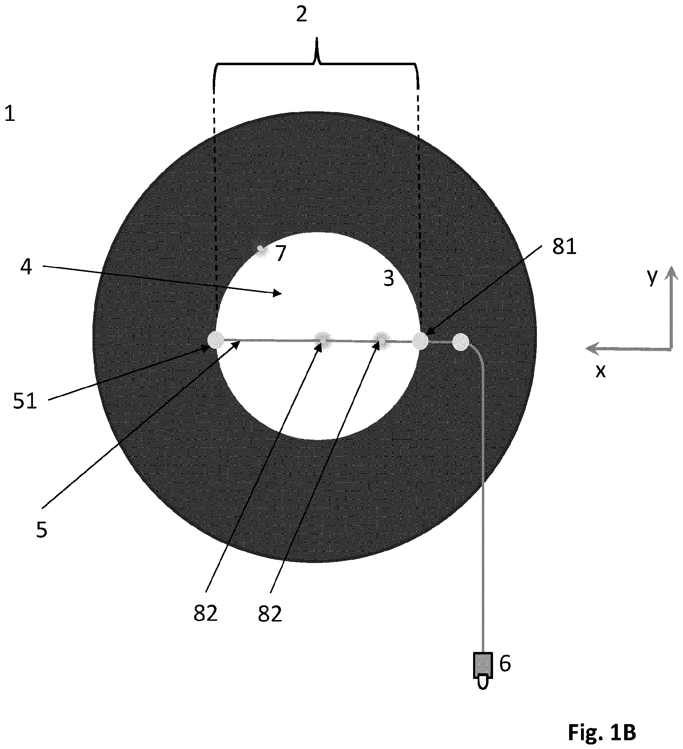

Figures 1A and 1B show an optical source 6 connected to the optical fiber part 5 for providing the fiber part 5 with light for performing the temperature measurements. The optical source can be provided with a port for connecting to it an optical fiber, or the light source may be a fiber optic connectorized light source, which may be attached with its own optical output fiber, which output fiber is connected to the optical fiber part 5. In use, the reactor chamber 2 may be filled with a catalyst material (not shown). Because the optical fiber part 5 is tensioned, the fiber grating sensors 53-56 remain at their predefined locations. Once the reactor chamber is filled, the catalyst material may be brought up to temperatures in the neighborhood of or above 400 K, leading to a thermal generation process, and it may then be desired to generate a temperature profile of the catalyst material in the interior of the reactor chamber 2. To determine such a profile, the optical source 6 may be activated to provide an optical wave to the optical fiber part 5. The optical wave will propagate through the fiber part 5 and be partially transmitted and reflected by fiber grating sensors 53-56. Depending on the local temperature at each fiber grating sensor, the portion of the incident wave that is reflected and transmitted will vary. By measuring at least one of these portions, the local temperature at the locations of each fiber grating sensor may be determined. These temperature values then provide a temperature gradient along the direction of the fiber part 5.

Due to the high temperatures common to these measurements, the reactor chamber 2 is made of materials having coefficients of thermal expansion below a predefined maximum. In this way, the expansion of the chamber due to high temperatures can be limited and controlled for. Expansion of the chamber introduces strain on the fiber grating sensors 53-56, which distorts the optical temperature measurements and complicates interpretation of the measurement data. To compensate for this strain effect, the catalyst bed is further provided with an additional temperature sensor 7 (shown in figure 1B) for performing a reference temperature measurement of the reactor chamber. This additional sensor 7 is implemented in the catalyst bed 1 such that it is not subject to the common strain experienced by the fiber grating sensors 53-56. In use then, the temperature measured using the additional sensor 7 can be used to determine the expansion of the chamber 2 and thereby deduce the strain on the fiber grating sensors 53-56. This information enables to correct for the strain effect on the optical behavior of the fiber grating sensors 53-56. The additional sensor 7 may be formed of a second optical fiber part comprising a fiber grating sensor positioned in or at the one or more sidewalls of the chamber 2, but alternatively may be formed of a thermocouple or other temperature sensor. In another alternative, the additional sensor 7 may be formed by a fiber grating sensor in a second optical fiber part (not shown). The second optical fiber part would be an extended part of the optical fiber part 5. For functioning to perform the reference temperature measurement of the reactor chamber, the second optical fiber part would be unstrained in use, such that is not subject to the common strain acting on the sensors 53-56.

A temperature gradient obtained with the first optical fiber part 5 will have a z-component, but also an x-component and a y-component. The z-component may be of primary interest. Thus, in order to compensate for the x-component and the y-component, the catalyst bed is further provided with a third optical fiber part 8 comprising a plurality of fiber grating sensors 82. In alternative embodiments, multiple third optical fiber parts may be included for additional temperature measurements, e.g. using fiber grating sensors. Optical fiber part 8 is tensioned between mounting positions 51 and 81 and extends horizontally through the interior of the reactor chamber 2; mounting position 51 serves to fix both optical fiber part 5 and optical fiber part 8 at its location. In alternative embodiments, optical fiber parts 5 and 8 may not share a mounting position and may be fixed at unique mounting positions. Mounting positions of optical fiber parts 5 and 8 may however be positioned close to each other. For example, they may be positioned directly above each other, such that the fiber grating sensors of the fiber part 5 may share x-coordinates and y-coordinates with fiber grating sensors of the fiber part 8. Moreover, in alternative embodiments, optical fiber part 8 may extend through the reactor chamber 2 in a direction having a z-component. Performing temperature measurements with the third optical fiber part 8 yields an additional temperature gradient along the direction in which fiber part 8 extends, in this case horizontally. The combination of the temperature gradients, respectively obtained using optical fiber part 5 and optical fiber part 8, can be used to eliminate the x-component and the y-component of the temperature gradient of fiber part 5. This enables to determine a temperature gradient of a catalyst material in the vertical, or z-direction.

The spatial resolution of the temperature measurements enabled by the invention is limited by the dimensions of the fiber grating sensors and their spacing. This limitation can be lifted however, by means of interpolation and extrapolation of measurement data. The use of multiple fiber parts, each having multiple fiber grating sensors, further provides advantage by enabling to determine a 3D temperature profile in at least part of the interior of the reactor chamber 2.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. Moreover, any of the components and elements of the various embodiments disclosed may be combined or may be incorporated in other embodiments where considered necessary, desired or preferred, without departing from the scope of the invention as defined in the claims.

In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Expressions such as "consisting of", when used in this description or the appended claims, should be construed not as an exhaustive enumeration but rather in an inclusive sense of "at least consisting of'. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Any of the claimed or disclosed devices or portions thereof may be combined together or separated into further portions unless specifically stated otherwise, without departing from the claimed invention. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the spirit and scope of the invention, as is determined by the claims. The invention may be practiced otherwise then as specifically described herein, and is only limited by the appended claims.

## Claims

1. Catalyst bed comprising a temperature sensor array, wherein the catalyst bed comprises a reactor chamber for being filled with a catalyst material, the reactor chamber having a bottom and one or more side walls defining an interior of the reactor chamber,
wherein the temperature sensor array comprises at least one first optical fiber part comprising at least two fiber grating sensors, wherein each of the at least two fiber grating sensors provides a temperature sensor of the temperature sensor array, and
wherein the first optical fiber part is fixed to the reactor chamber in at least two mounting positions along a length of the first optical fiber part, such that the first optical fiber part between the two mounting positions extends through the interior of the chamber, and wherein the fixing of the first optical fiber part is such that the first optical fiber part is tensioned between the mounting positions, such that each of the at least two fiber grating sensors is located at a predefined sensing position in the interior of the chamber.

2. Catalyst bed according to claim 1, wherein the reactor chamber optionally further has a top surface for defining the interior of the reactor chamber, such that the reactor chamber is a closed reactor chamber.

3. Catalyst bed according to claim 1 or 2, wherein each of the at least two mounting positions of the first optical fiber part is respectively fixed at a fixing location in the reaction chamber, such that the first optical fiber part extends between two points within the reaction chamber along a direction that is pointing away from the one or more sidewalls of the reaction chamber comprising the respective fixing locations.

4. Catalyst bed according to any of the claims 1-3, wherein the first optical fiber part extends between two points within the reaction chamber in a direction such that each of the at least two fiber grating sensors is located at a unique sensing position between a top and the bottom of the catalyst bed, such as to enable measurement by the temperature sensors at different z-positions between the top and bottom of the catalyst bed.

5. Catalyst bed according to any one or more of the preceding claims, connectable to an optical source for providing an optical signal to the temperature sensor array for performing temperature measurements using the temperature sensors of the first optical fiber part.

6. Catalyst bed according to any one or more of the preceding claims, wherein the one or more sidewalls of the reactor chamber are formed of a material having a coefficient of thermal expansion below a predefined maximum, for example a coefficient of thermal expansion below 1*10⁻⁴ K⁻¹ at temperatures of approximately 400 K.

7. Catalyst bed according to claim 6, wherein the one or more sidewalls of the reactor chamber comprise materials selected from a group comprising: Invar, Kovar, Silicon, Pyrex, and Zerodur.

8. Catalyst bed according to any of the claims 2-7, further comprising an additional temperature sensor at a sensing position in or on a sidewall or the top surface or bottom of the reactor chamber for performing a reference temperature measurement.

9. Catalyst bed according to claim 8, wherein the additional temperature sensor for performing said reference temperature measurement is provided by a second optical fiber part including a further fiber grating sensor, the second optical fiber part being mounted such that the further fiber grating sensor is unstrained in use.

10. Catalyst bed according to claim 9, wherein the second optical fiber part is provided by an extended part of one of the at least one first optical fiber parts.

11. Catalyst bed according to any of the preceding claims, wherein the at least one first optical fiber part comprises a plurality of first optical fiber parts comprising a plurality of temperature sensors such as to provide the temperature sensor array.

12. Catalyst bed according to any of the preceding claims, comprising at least one third optical fiber part, the at least one third optical fiber part comprising a plurality of fiber grating sensors for measuring a lateral profile of a temperature distribution in a lateral direction with respect to a notional z-axis through a center location of the bottom, for enabling correction of temperature measurements obtained with the fiber grating sensors of the at least one first optical fiber part with respect to the lateral temperature profile.

13. Catalyst bed according to claim 12, wherein lateral positions of each of the plurality of fiber grating sensors of the at least one third optical fiber part uniquely correspond to lateral positions of fiber grating sensor of the at least one first optical fiber part.

14. Catalyst bed according to claim 12 or 13, wherein at least one of the at least one third optical fiber part is provided by an extended part of one of the at least one first optical fiber part.
